# EUROPÄISCHE PATENTSCHRIFT

(11) **EP 1 497 167 B1**
(45) Veröffentlichungstag und Bekanntmachung des Hinweises auf die Patenterteilung: **19.10.2005**
(21) Anmeldenummer: 03720227.2
(22) Anmeldetag: 20.03.2003
(51) Int. Cl.: B62D 25/24

(54) **EINSTÜCKIGER VERSCHLUSSDECKEL**
SINGLE-PIECED SEALING COVER
BOUCHON DE FERMETURE MONOBLOC

(30) Priorität: 22.04.2002 DE 20206393 U
(43) Veröffentlichungstag der Anmeldung: 19.01.2005
(73) Patentinhaber: TRW Automotive Electronics & Components GmbH & Co. KG, 78315 Radolfzell (DE)
(72) Erfinder: KRAUS, Willibad, 67269 Grünstadt (DE)
(74) Vertreter: Eder, Thomas
(86) Internationale Anmeldenummer: PCT/DE2003/000935
(87) Internationale Veröffentlichungsnummer: WO 2003/089288

(56) Entgegenhaltungen:
- DE-A- 3 142 850
- DE-U- 20 107 612
- US-A- 4 760 935
- US-A- 5 071 022

## Beschreibung

Die Erfindung bezieht sich auf einen einstückigen Verschlussdeckel aus einem thermoplastischen Elastomer, insbesondere zum Verschließen einer Öffnung in einem Träger, mit einem Grundkörper, an welchen sich ein umlaufender Bund anschließt, nach dem Oberbegriff des Anspruchs 1. Ein solcher Verschlussdeckel ist in DE 201 07 612 U1 offenbart.

Als Stand der Technik sind bereits derartige Verschlussdeckel bekannt (DE 35 12 582 C3, DE 37 13 503 C1). Diese Verschlussdeckel weisen jeweils eine elastische Dichtlippe und - dieser gegenüberliegend - einen oder mehrere Rastringe auf. Hierdurch soll im montierten Zustand neben einer guten Halterung in einem Träger eine einwandfreie Abdichtung gewährleistet werden. Nachteilig ist bei diesen bekannten Konstruktionen, dass für verschiedene Gestaltungen des Trägers im Bereich seiner Öffnung verschiedene Verschlussdeckel bereit gehalten werden müssen, um die vorgenannten Forderungen zu erfüllen.

Entsprechend liegt der vorliegenden Erfindung die Aufgabe zugrunde, einen Verschlussdeckel der eingangs genannten Art zu schaffen, welcher - unabhängig von der Gestaltung des Bereichs der Trägeröffnung - eine sichere und effektive Abdichtung dieser Trägeröffnung gewährleistet.

Diese Aufgabe wird erfindungsgemäß durch die Merkmale des Anspruchs 1 gelöst.

Durch die kombinative Wirkung dieser einzelnen Merkmale wird ein neuartig gestalteter Verschlussdeckel geschaffen, welcher eine erhebliche Teilereduzierung ermöglicht, wobei durch den speziell verwendeten thermoplastischen Elastomer ein Verkleben mit der Deckfläche im Bereich der Trägeröffnung geschaffen wird. Hierdurch ergibt sich neben einer einfachen Montage ein einwandfreier Verschluss der betreffenden Trägeröffnung.

In weiterer Ausgestaltung der Erfindung kann die Dichtlippe den Rastring weitgehend überdecken.

Der Rastring kann in der Ebene des Grundkörpers liegen und stirnseitig eine Anschlaglippe aufweisen. Weiterhin besteht die Möglichkeit, dass die Außenflächen der Dichtlippe und des Rastrings zueinander geneigt sind. An die Außenfläche des Rastrings kann hierbei eine in die Anschlaglippe übergehende Fläche anschließen, welche die gleiche Neigung, wie die Außenfläche der Dichtlippe aufweist.

Die Erfindung wird nachfolgend anhand von in der Zeichnung dargestellten Ausführungsbeispielen näher beschrieben. In der Zeichnung zeigen:
- Fig. 1: einen Mittelschnitt durch den erfindungsgemäßen Verschlussdeckel in einer ersten Ausführungsform,
- Fig. 2a, b, c: verschiedene Gestaltungsmöglichkeiten der Trägeröffnung im Mittelschnitt, teils gebrochen,
- Fig. 3: eine Draufsicht auf den Verschlussdeckel nach Fig. 1, teils gebrochen,
- Fig. 4: eine Seitenansicht des Verschlussdeckels nach Fig. 1 und 3, teils gebrochen,
- Fig. 5: eine vergrößerte Ansicht des Bereichs X nach Fig. 1,
- Fig. 6: eine andere Verschlussdeckel im Bereich der Dichtlippe, im Mittelschnitt, teils gebrochen.

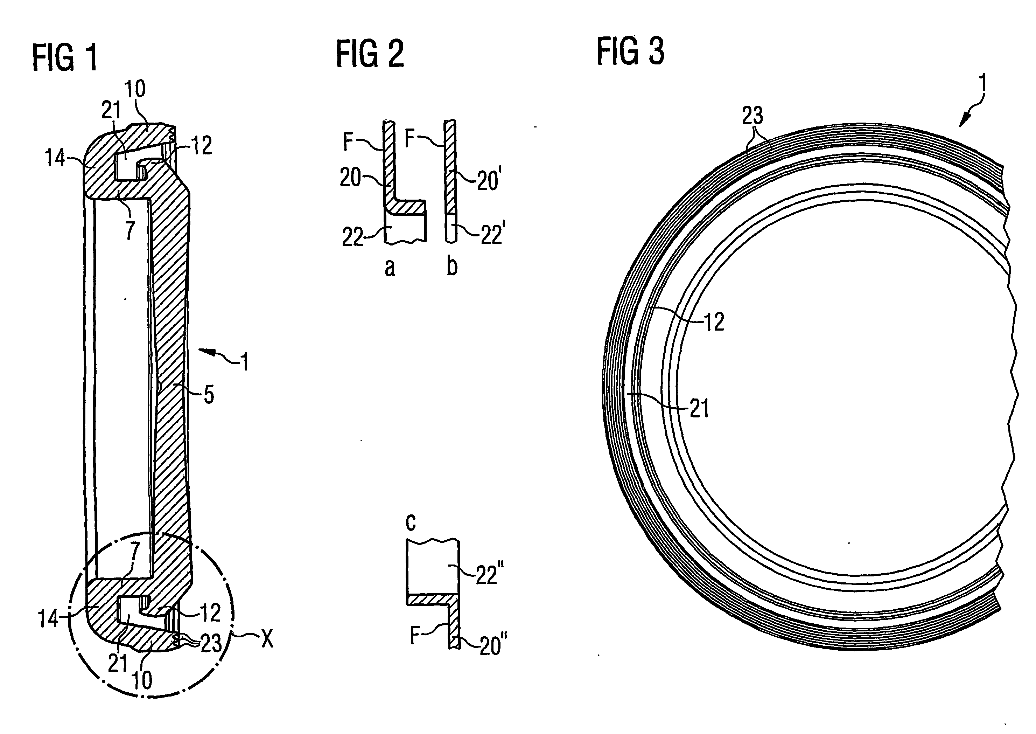

In den Fig.1, 3, 4 und 5 ist ein einstückiger Verschlussdeckel 1 aus einem thermoplastischen Elastomer dargestellt. Dieser Verschlussdeckel dient insbesondere zum Verschließen einer in Fig. 2 schematisch dargestellten Öffnung 22 bzw. 22' bzw. 22" eines Trägers. Dieser Träger kann nach Fig. 2a einen außen gerichteten Bund aufweisen, nach Fig. 2b glatt verlaufen und nach Fig. 2c einen nach innen gerichteten Bund besitzen. Mit Hilfe des erfindungsgemäßen Verschlussdeckels besteht nun die Möglichkeit, diesen auch bei verschieden gestalteten Trägem 20, 20' bzw. 20" im Bereich der jeweiligen Öffnung einwandfrei zu montieren und diese Öffnung zu verschließen.

Der Verschlussdeckel 1 weist einen Grundkörper 5 auf, an welchen sich ein umlaufender Bund 7 anschließt. Der umlaufende Bund 7 geht in mindestens eine sich gegen eine Seite des Trägers anliegende elastische Dichtlippe 10 über, wobei der Bund 7 mindestens einen der Dichtlippe 10 gegenüber liegenden Rastring 12 aufweist.

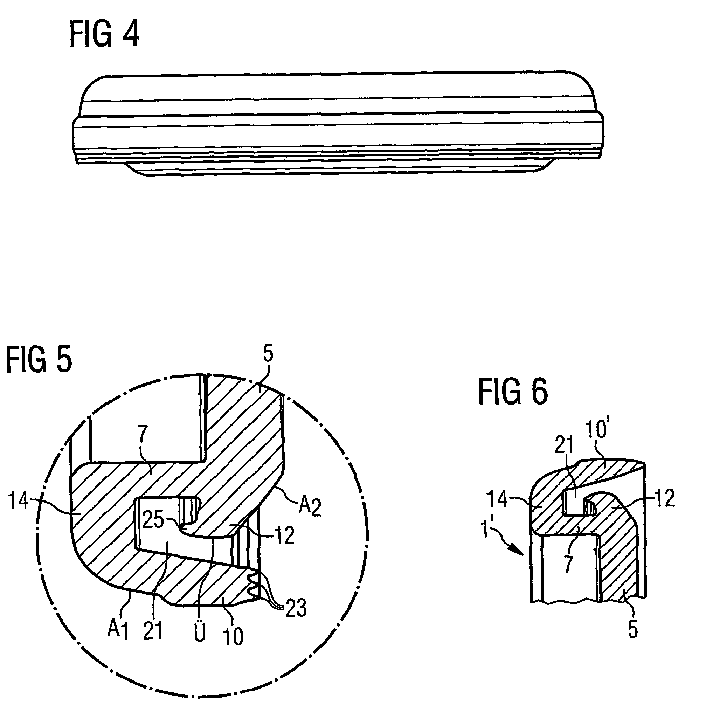

Wie insbesondere aus Fig. 1 und 5 ersichtlich, ist der Bund 7 über einen parallel zu einer Deckfläche F (Fig. 2) des Trägers 20, 20', 20" verlaufenden Zwischenbereich 14 mit der Dichtlippe 10 verbunden. Darüber hinaus ragt der Rastring 12 in einen durch den Zwischenbereich 14 und die Dichtlippe 10 gebildeten Innenraum 21 hinein, wie insbesondere aus Fig. 5 erkennbar ist.

Erfindungsgemäß ist nun ein Außenbereich der Dichtlippe 10 mit der Deckfläche F des Trägers 20, 20', 20" verklebbar.

Aus Fig. 1 geht hervor, dass die Dichtlippe 10 den Rastring 12 weitgehend überdeckt. Darüber hinaus weist die Dichtlippe 10 bei der Ausführungsform nach Fig. 1 und 5 stirnseitig mehrere, mit der Deckfläche F des jeweiligen Trägers verklebbare Verzahnungsrippen 23 als Außenbereich auf.

Der Rastring 12 liegt nach Fig. 1 und 5 in der Ebene des Grundkörpers 5 und weist stirnseitig eine Anschlaglippe 25 auf. Insbesondere aus Fig. 5 ist erkennbar, dass die Außenflächen A₁, A₂ der Dichtlippe 10 und des Rastrings 12 zueinander geneigt sind. Erfindungsgemäß besteht hierbei außerdem die Möglichkeit, dass an die Außenfläche A₂ des Rastrings 12 eine in die Anschlaglippe 25 übergehende Fläche Ü anschließt, welche in etwa die gleiche Neigung wie die Außenfläche A₁ der Dichtlippe 10 aufweist.

Liegt nach Fig. 2a ein Träger 20 mit einem entsprechend gestalteten Bund vor, so beaufschlagt die Dichtlippe 10 mit den Verzahnungsrippen 23 die Fläche F des Trägers, wobei der Rastring 12 mit der Anschlaglippe 25 den betreffenden Bund des Trägers 20 übergreift.

Bei einem Träger 20' nach Fig. 2b beaufschlagt die elastische Dichtlippe 10 mit den Verzahnungsrippen 23 die Fläche F des Trägers 20', wohingegen der Rastring 12 mit der Anschlaglippe 25 die andere Seite des Trägers überdeckt, und beide Elemente miteinander verklebt sind.

Liegt ein Träger 20" mit einer Öffnung 22" vor, so lagert sich der betreffende Bund wiederum in dem Innenraum 21 des Verschlussdeckels 1 ein, wobei die elastische Dichtlippe 10 mit ihren Verzahnungsrippen 23 gleichfalls mit der Fläche F des Trägers 20" verklebt ist.

Beim Verschlußdeckel nach Fig. 6 ist die elastische Dichtlippe 10' konisch zulaufend zur Deckfläche F des Trägers 20, 20', 20" ausgebildet und mit dieser verklebbar.

Durch die Gestaltung des Innenraums 21, die besondere Form der Dichtlippe 10 bzw. 10' und des Rastrings 12 und durch die spezielle Materialauswahl insofern, als der Verschlussdeckel aus einem thermoplastischen Elastomer besteht, wird auf einfache Weise eine erhebliche Teilereduzierung bei der Gestaltung des Verschlussdeckels gewährleistet.

## Patentansprüche

1. Einstückiger Verschlussdeckel (1) aus einem thermoplastischen Elastomer, insbesondere zum Verschließen einer Öffnung (22, 22', 22") in einem Träger (20, 20', 20") mit einem Grundkörper (5), an welchem sich ein umlaufender Bund (7) anschließt, welcher mindestens in eine, sich gegen eine Seite des Trägers anliegende elastische Dichtlippe (10) übergeht, wobei der Bund (7) mindestens einen der Dichtlippe (10) gegenüberliegenden Rastring (12) aufweist,
der Bund (7) über einen Zwischenbereich (14) mit der Dichtlippe (10) verbunden ist, und
wobei der Rastring (12) in einen durch den Zwischenbereich (14) und die Dichtlippe (10) gebildeten Innenraum (21) hineinragt, **dadurch gekennzeichnet, dass** der Zwischenbereich (14) parallel zu einer Deckfläche (F) des Trägers (20, 20', 20") verläuft und
dass ein Außenbereich der Dichtlippe (10) mit der Deckfläche (F) des Trägers über mehrere Verzahnungsrippen (23) verklebbar ist.

2. Verschlussdeckel nach Anspruch 1, **dadurch gekennzeichnet, dass** der Rastring (12) in der Ebene des Grundkörpers (5) liegt und stirnseitig eine Anschlaglippe (25) aufweist.

3. Verschlussdeckel nach Anspruch 1 oder 2, **dadurch gekennzeichnet, dass** die Außenflächen (A₁, A₂) der Dichtlippe (10) und des Rastrings (12) zueinander geneigt sind.

4. Verschlussdeckel nach Anspruch 3, **dadurch gekennzeichnet, dass** an die Außenfläche (A₂) des Rastrings (12) eine in die Anschlaglippe (25) übergehende Fläche (Ü) anschließt, welche die gleiche Neigung wie die Außenfläche (A₁) der Dichtlippe (10) aufweist.

## Claims

1. One-piece closure cap (1) made of a thermoplastic elastomer, in particular for closing an opening (22, 22', 22'') in a carrier (20, 20', 20''), comprising a basic body (5) which is adjoined by a peripheral collar (7) which merges at least into one elastic sealing lip (10) bearing against one side of the carrier, the collar (7) having at least one catch ring (12) situated opposite the sealing lip (10), the collar (7) being connected to the sealing lip (10) via an intermediate region (14), and the catch ring (12) protruding into an inner space (21) formed by the intermediate region (14) and the sealing lip (10), **characterized in that** the intermediate region (14) extends parallel to an outer face (F) of the carrier (20, 20', 20''), and **in that** an external region of the sealing lip (10) can be adhesively bonded to the outer face (F) of the carrier by means of a plurality of tooth-forming ribs (23).

2. Closure cap according to Claim 1, **characterized in that** the catch ring (12) lies in the plane of the basic body (5) and has a stop lip (25) at its end.

3. Closure cap according to Claim 1 or 2, **characterized in that** the external faces (A₁, A₂) of the sealing lip (10) and of the catch ring (12) are inclined towards one another.

4. Closure cap according to Claim 3, **characterized in that** the external face (A₂) of the catch ring (12) is adjoined by a face (Ü) which merges into the stop lip (25) and which has the same inclination as the external face (A₁) of the sealing lip (10).

## Revendications

1. Bouchon monobloc (1) en un élastomère thermoplastique, en particulier pour la fermeture d'une ouverture (22, 22',22 ") dans un support (20,20',20") avec un corps de base (5), auquel est raccordé un collet circulaire (7), qui se confond au moins en une lèvre d'étanchéité élastique (10) contiguë à un côté du support, le collet (7) présentant au moins un anneau d'arrêt (12) en regard de la lèvre d'étanchéité (10),
le collet (7) est raccordé à la lèvre d'étanchéité (10) par le biais d'une zone intermédiaire (14), et
l'anneau d'arrêt (12) faisant saillie dans une chambre interne (21) formée par la zone intermédiaire (14) et la lèvre d'étanchéité (10),
**caractérisé en ce que** la zone intermédiaire (14) s'étend parallèlement à une face de recouvrement (F) du support (20,20',20") et
**en ce qu'**une zone externe de la lèvre d'étanchéité (10) peut être collée avec la face de recouvrement (F) du support par le biais de plusieurs nervures dentelées (23).

2. Bouchon selon la revendication 1,
**caractérisé en ce que** l'anneau d'arrêt (12) se situe dans le plan du corps de base (5) et présente frontalement une lèvre de butée (25).

3. Bouchon selon la revendication 1 ou 2,
**caractérisé en ce que** les faces externes (A1, A2) de la lèvre d'étanchéité (10) et de l'anneau d'arrêt (12) sont inclinées l'une vers l'autre.

4. Bouchon selon la revendication 3,
**caractérisé en ce que** sur la face externe (A2) de l'anneau d'arrêt (12) vient se raccorder une face (Ü) qui se fond dans la lèvre de butée (25) et qui présente la même inclinaison que la face externe (A1) de la lèvre d'étanchéité (10).
